# EUROPEAN PATENT SPECIFICATION

(11) **EP 0 406 598 B1**
(45) Date of publication and mention of the grant of the patent: **23.03.1994**
(21) Application number: 90111288.8
(22) Date of filing: 15.06.1990
(51) Int. Cl.: A23J 3/34, A23L 1/227, A23L 1/231

(54) **Protein hydrolysis**
Protein-Hydrolyse
Hydrolyse de protéines

(30) Priority: 07.07.1989 US 377522
(43) Date of publication of application: 09.01.1991
(73) Proprietor: SOCIETE DES PRODUITS NESTLE S.A., 1800 Vevey (CH)
(72) Inventor: Kwon, Steven Soon-Young, New Milford, Conn. 06776 (US); Vadehra, Dharam Vir, New Milford, Conn. 06776 (US)
(74) Representative: Schulz, Rütger, Dr. Dipl.-Phys.

(56) References cited:
- JOURNAL OF DIARY RESEARCH, vol. 55, no. 2, 1988, pages 239-245; Y. ARDÖ et al.:"Accelerated cheese ripening with heat treated cell of Lactobacillus helveticusand a commercial proteolytic enzyme"
- FSTA, 76-02-P0407, 76010096; T. CSERHATI et al.: "Use of proteases of microbialorigin in the dairy industry. Role of the proteolytic activity of lactic acidbacteria in the occurrence of the bitter taste defect",
- & BUDAPESTI MUESZAKI EGYETEM MEZOEGASDASAGI KFMIAI TECH. TANSZEK,HUNGARY TEJIPARI KUTATASI KOEZLEMENYEK, 58 ref. 16, 32-52, 1973
- T.E. FURIA et al.: "Fenaroli's Handbook of Flavor Ingredients", 1971, pages752-753, The Chemical Rubber Co., Ohio, US

## Description

The present invention relates to a process of enzymatically hydrolysing protein material, to give a hydrolysate which is substantially free of a bitter taste.

Hydrolysed proteins, which are widely used in the food industry, may be prepared by hydrolysis of protein material with acid, alkali or enzymes. However, on the one hand, acid or alkaline hydrolysis can destroy the essential amino acids produced during the hydrolysis thus reducing the nutritional value whereas enzymatic hydrolysis with proteases rarely goes to completion so that the hydrolysed protein contains substantial amounts of peptides and, depending on the nature of the protein and the enzyme used for proteolysis, the peptides formed can have extremely bitter tastes and are thus organoleptically undesirable.

Various methods have been tried to overcome the problem of bitter tasting peptides. For instance, European Patent Application No. 223560 claims a method for flavour control of a protein hydrolysate which comprises selecting a proteinaceous feedstock, subjecting said feedstock to a primary enzymatic hydrolysis with a proteinase to produce a primary hydrolysate including bittering substances, characterised by subjecting said primary hydrolysate to a secondary enzymatic hydrolysis with an extract containing aminopeptidase enzymes said secondary enzymatic hydrolysis acting to convert said bittering substances at least to flavour - neutral substances. Examples of proteinaceous feedstocks described are soya protein, gluten, whey protein, casein, haemoglobin, yeast extract, cereal proteins, milk, milk powder, skimmed milk, potato extracts and microbial derived proteins. The only method described for the production of the aminopeptidases is by extraction from Streptococcus lactis, but this extract may contain contaminating protease which can further generate bitterness by hydrolysing any proteins left in the substrate.

In FSTA, 76-02-PO407, 76010096; T. CSERHATI et al. : "Use of proteases of microbiological origin in the dairy industry. Role of the proteolytic activity of lactic acid bacteria in the occurrence of the bitter taste defect", 58 ref. 16, 32-52, 1973, Abstract, a process is described comprising incubation of casein with a lactic acid bacteria to reduce the bitter taste caused by protease hydrolysis. Temperatures are not mentioned.

We have found that some proteolysed cheese products, such as Swiss cheese or cheddar cheese, when subjected to hydrolysis with extracts of protease and aminopeptidase, retain their bitter taste. In "Journal of Dairy Research" (1985), 55, 239-245 a process is described comprising incubation of a cheese with a microorganism which is capable of producing peptidases which hydrolyse the bitter tasting polypeptides to give debittered substances. However the temperature of the incubation treatment is never above 41°C.

We have now found a method of substantially removing the bitter taste from enzymatically hydrolysed proteins which comprises incubating them with live cultures of certain food-grade microorganisms at a temperature from 45° to 60°C.

Accordingly, the present invention provides a process for the debittering of an enzymatically hydrolysed protein containing bitter tasting polypeptides which comprises incubating a slurry of the enzymatically hydrolysed protein containing bitter tasting polypeptides with a culture of a food-grade microorganism which is capable of producing peptidases which hydrolyse the bitter tasting polypeptides to give debittered substances characterised in that the temperature of the incubation is from 45° to 60°C.

The enzymatically hydrolysed protein may be derived from the proteolysis by conventional methods of protein containing materials such as plant protein, chicken, meat, fish, casein, hard or soft cheese, e.g. Swiss cheese or cheddar cheese, whey protein or peptamen. During proteolysis, bitter tasting polypeptides are produced.

The food-grade microorganism may be selected from, for instance, yeasts, moulds, bacteria such as streptococci, bacilli or lactobacilli, preferably Lactobacillus helveticus. The food-grade microorganism may produce intracellular peptidases which may be secreted or may not be secreted in any substantial amount across the cell membrane. When the peptidases remain intracellular, it is thought that bitter tasting polypeptides permeate into the cells where they are hydrolysed by the peptidases to give debittered substances which are permeated back out of the cells into the slurry.

The peptidases produced by the food-grade microorganism are usually dipeptidase, tripeptidase, aminopeptidase and carboxypeptidase.

Advantageously, the food-grade microorganism may be heat-shocked before incubation e.g. treated at 55°-70°C for up to a few minutes to render the cell walls porous and to reduce their ability to produce acids from free sugar.

The enzymatically hydrolysed protein is conveniently used in a concentration of from 5 to 50% and preferably from 10 to 30% by weight of solids base on the total weight of the slurry.

The cell concentration of the food-grade microorganism is conveniently from 10³ to 10¹⁰ cells/g and preferably from 10⁴ to 10⁸ cells/g.

The incubation temperature is conveniently from 50°C to 55°C. The duration of the incubation is suitably from 4 to 30 hours, preferably from 10 to 24 hours and especially from 12 to 20 hours.

The pH during the incubation may be from 5 to 7.5 and preferably from 5.5 to 7.2, the optimal pH depending upon the nature of the substrate.

The incubation may be carried out without agitation but preferably the slurry is agitated, for example stirring from 50 to 300 rpm.

The debittered protein obtained by the process of this invention may be used as a material for the production of Maillard reaction meat flavours by reacting with suitable carbohydrates by methods well known to those skilled in the art.

After incubation, the debittered protein is pasteurised e.g. at a temperature from 65° to 80°C over a period of from 10 to 30 minutes, preferably with agitation or by high temperature short time treatment, followed by cooling. If desired, flavouring agents e.g. propionic acid, may be added to the slurry before or after pasteurisation.

The final product may be dried and, as such, can be stored at room temperature. If the final product is in the liquid form, it should be stored under frozen or refrigerated conditions depending on the length of storage desired.

The following Examples further illustrate the present invention. Parts and percentages are given by weight unless otherwise stated.

### Example 1

Swiss cheese cubes were made into a 70% slurry (containing about 19% protein) in a food processor after adding water, 1.2% salt and 0,9% sodium citrate buffer to pH 5.8. Then protein hydrolysis and simultaneous debittering of the protein hydrolysate produced was carried out by mixing the slurry with a protease solution and a Lactobacillus helveticus culture at a cell concentration of 10⁷ cells/g which had been heat shocked by heat treating at 60°C for 1 minute. The incubation was carried out at 45°C for 16 hours without agitation.

After incubation, the debittered Swiss cheese flavour slurry was mixed with 1.5% propionic acid to improve the flavour and then pasteurised at 75°C for 15 minutes with stirring, after which the product was finally packaged.

The product had a pleasant flavour completely free of bitterness.

### Example 2

A 20% chicken broth hydrolysate slurry was incubated with a Lactobacillus helveticus culture at a cell concentration of 10⁷ cells/g at 45°C for 16 hours at pH 6.2 with stirring at 200 rpm.

The product was pasteurised at 77°C for 15 minutes with stirring and then cooled to less than 5°C. The product had a pleasant flavour free of bitterness.

### Example 3

A 20% casein hydrolysate slurry was incubated with a Lactobacillus helveticus culture at a cell concentration of 10⁷ cells/g at 45°C for 16 hours at pH 7.0 with stirring at 150 rpm.

The product was pasteurised at 70°C for 15 minutes with stirring and cooled to less than 5°C. The product had a bland flavour free of bitterness.

### Example 4

A 20% whey protein hydrolysate slurry obtained by alkaline proteolysis of whey protein was incubated with a Lactobacillus helveticus culture at a cell concentration of 10⁷ cells/g at 45°C for 16 hours at pH 7.0 with stirring at 100 rpm.

The product was pasteurised at 70°C for 15 minutes and then cooled to less than 5°C. It had a bland flavour free of bitterness.

### Example 5

Soybean protein hydrolysate was made into a 10% solution in water and incubated with Lactobacillus helveticus culture for 8 hours at 55°C at a pH in the range of from 6.5 to 7.0. At the end of the incubation, as well as being debittered there was also lack of beany notes in the product. The product was pasteurised at 70°C for 15 minutes and used for the production of other flavour ingredients by reaction flavour technology.

## Claims

1. A process for the debittering of an enzymatically hydrolysed protein containing bitter tasting polypeptides which comprises incubating a slurry of the enzymatically hydrolysed protein containing bitter tasting polypeptides with a culture of a food-grade microorganism which is capable of producing peptidases which hydrolyse the bitter tasting polypeptides to give debittered substances characterised in that the temperature of the incubation is from 45° to 60°C.

2. A process according to claim 1 wherein the food-grade microorganism is selected from the group consisting of yeasts, moulds and bacteria.

3. A process according to claim 2 wherein the bacteria is selected from the group consisting of streptococci, lactobacilli and bacilli.

4. A process according to claim 1 wherein the food-grade microorganism is Lactobacillus helveticus.

5. A process according to claim 1 wherein the food-grade microorganism produces intracellular peptidases which are not secreted in any substantial amount across the cell membrane.

6. A process according to claim 1 wherein the food-grade microorganism is heat shocked before incubation.

7. A process according to claim 1 wherein the enzymatically hydrolysed protein is used in a concentration of from 5 to 50% by weight based on the total weight of the slurry.

8. A process according to claim 1 wherein the cell concentration of the food-grade microorganism is from 10⁴ to 10⁸ cells/g.

9. A process according to claim 1 wherein the incubation is carried out at a temperature from 50°C to 55°C for a period of from 4 to 30 hours.

10. A process according to claim 1 wherein the pH during the incubation is from 5 to 7.5.

11. A process according to claim 1 wherein the incubation takes place with stirring at 50 to 300 rpm.

12. A process according to claim 1 wherein a flavouring agent is added to the resultant product.

13. A process according to claim 1 wherein the resultant product is pasteurised.

14. A process of producing a Maillard reaction meat flavour by reacting a debittered protein prepared by a process according to any of the preceding claims with a suitable carbohydrate.

## Patentansprüche

1. Verfahren zum Entbittern eines enzymatisch hydrolysierten Proteins mit einem Gehalt an bitter schmeckenden Polypeptiden, welches Verfahren das Inkubieren einer Aufschlämmung des enzymatisch hydrolysierten Proteins mit einem Gehalt an bitter schmeckenden Polypeptiden mit einer Kultur eines Mikroorganismus von Nahrungsmittelqualität, welcher befähig ist, Peptidasen zu produzieren, welche die bitter schmeckenden Polypeptide unter Bildung von Substanzen hydrolysieren, welche nicht mehr bitter schmecken, umfaßt, dadurch gekennzeichnet, daß die Temperatur des Inkubierens 45°C bis 60° beträgt.

2. Verfahren nach Anspruch 1, wobei der Mikroorganismus von Nahrungsmittelqualität aus einer Gruppe ausgewählt wird, welche aus Hefen, Schimmelpilzen und Bakterien besteht.

3. Verfahren nach Anspruch 2, wobei die Bakterien aus einer Gruppe ausgewählt sind, welche aus Streptokokken, Laktobazillen und Bazillen besteht.

4. Verfahren nach Anspruch 1, wobei der Mikroorganismus von Nahrungsmittelqualität Lactobacillus helveticus ist.

5. Verfahren nach Anspruch 1, wobei der Mikroorganismus von Nahrungsmittelqualität intrazelluläre Peptidasen produziert, welche keineswegs in wesentlichen Mengen quer durch die Zellmembran hindurch sezerniert werden.

6. Verfahren nach Anspruch 1, wobei der Mikroorganismus von Nahrungsmittelqualität vor dem Inkubieren einem Wärmeschock unterworfen wird.

7. Verfahren nach Anspruch 1, wobei das enzymatisch hydrolysierte Protein in einer Konzentration von 5 bis 50 Gew.-%, bezogen auf das Gesamtgewicht der Aufschlämmung, eingesetzt wird.

8. Verfahren nach Anspruch 1, wobei die Zellkonzentration des Mikroorganismus von Nahrungsmittelqualität 10⁴ bis 10⁸ Zellen/g beträgt.

9. Verfahren nach Anspruch 1, wobei die Inkubation bei einer Temperatur von 50°C bis 55°C während einer Zeitspanne von 4 bis 30 h durchgeführt wird.

10. Verfahren nach Anspruch 1, wobei der pH-Wert während der Inkubation 5 bis 7,5 beträgt.

11. Verfahren nach Anspruch 1, wobei die Inkubation unter Umrühren bei 50 bis 300 U/min stattfindet.

12. Verfahren nach Anspruch 1, wobei zu dem so entstandenen Produkt ein Geschmacksstoff zugesetzt wird.

13. Verfahren nach Anspruch 1, wobei das so entstandene Produkt pasteurisiert wird.

14. Verfahren zur Herstellung eines Fleischgeschmacksstoffes unter Anwendung einer Maillard-Reaktion, durch Umsetzen eines Proteins, aus welchem der bittere Geschmack entfernt worden ist, und welches nach einem Verfahren gemäß einem der vorhergehenden Ansprüche hergestellt worden ist, mit einem geeigneten Kohlenhydrat.

## Revendications

1. Procédé pour supprimer le goût amer d'une protéine ayant subi une hydrolyse enzymatique, contenant des polypeptides donnant un goût amer, qui comprend la mise en incubation d'une suspension de la protéine ayant subi une hydrolyse enzymatique, contenant des polypeptides présentant un goût amer, avec une culture d'un micro-organisme de qualité alimentaire qui est capable de produire des peptidases qui hydrolysent les polypeptides présentant un goût amer en donnant des substances privées de goût amer, caractérisé en ce que la température d'incubation est comprise dans l'intervalle de 45°C à 60°C.

2. Procédé suivant la revendication 1, dans lequel le micro-organisme de qualité alimentaire est choisi dans le groupe consistant en des levures, des moisissures et des bactéries.

3. Procédé suivant la revendication 2, dans lequel la bactérie est choisie dans le groupe consistant en streptocoques, lactobacilles et bacilles.

4. Procédé suivant la revendication 1, dans lequel le micro-organisme de qualité alimentaire est Lactobacillus helveticus.

5. Procédé suivant la revendication 1, dans lequel le micro-organisme de qualité alimentaire produit des peptidases intracellulaires qui ne sont pas sécrétées en une quelconque quantité notable à travers la membrane cellulaire.

6. Procédé suivant la revendication 1, dans lequel le micro-organisme de qualité alimentaire est soumis à un choc thermique avant incubation.

7. Procédé suivant la revendication 1, dans lequel la protéine ayant subi une hydrolyse enzymatique est utilisée à une concentration de 5 à 50 % en poids, sur la base du poids total de la suspension.

8. Procédé suivant la revendication 1, dans lequel la concentration cellulaire du microorganisme de qualité alimentaire est de 10⁴ à 10⁸ cellules/g.

9. Procédé suivant la revendication 1, dans lequel l'incubation était effectuée à une température de 50°C à 55°C pendant un temps de 4 à 30 heures.

10. Procédé suivant la revendication 1, dans lequel le pH au cours de l'incubation est compris dans la plage de 5 à 7,5.

11. Procédé suivant la revendication 1, dans lequel l'incubation s'effectue sous agitation à une vitesse de 50 à 300 tr/min.

12. Procédé suivant la revendication 1, dans lequel un agent aromatisant est ajouté au produit résultant.

13. Procédé suivant la revendication 1, dans lequel le produit résultant est pasteurisé.

14. Procédé de production d'un arôme de viande formé par réaction de Maillard, par réaction d'une protéine privée de goût amer préparée par un procédé suivant l'une quelconque des revendications précédentes avec un glucide convenable.
